# EUROPEAN PATENT SPECIFICATION

(11) **EP 4 051 503 B1**
(45) Date of publication and mention of the grant of the patent: **30.09.2026**
(21) Application number: 20881016.8
(22) Date of filing: 29.10.2020
(51) Int. Cl.: B41F 33/00, G01L 5/00, B41F 33/02

(54) **DYNAMIC MEASURING OF OPERATING PARAMETERS OF A ROLLER NIP**
DYNAMISCHE MESSUNG VON BETRIEBSPARAMETERN EINES WALZENSPALTES
MESURE DYNAMIQUE DE PARAMÈTRES DE FONCTIONNEMENT DE LIGNE DE CONTACT DE ROULEAUX

(30) Priority: 30.10.2019 SE 1951239
(43) Date of publication of application: 07.09.2022
(73) Proprietor: Generic Technology i Kivik AB, 277 30 Kivik (SE)
(72) Inventor: CRONVALL, Leif, 277 30 Kivik (SE)
(74) Representative: Ström & Gulliksson AB
(86) International application number: PCT/SE2020/051048
(87) International publication number: WO 2021/086256

(56) References cited:
- EP-A1- 0 616 202
- EP-A1- 0 803 719
- EP-A1- 0 803 719
- EP-A1- 0 867 281
- EP-A1- 1 477 315
- EP-A1- 1 477 315
- EP-A1- 1 557 638
- EP-A2- 1 048 370
- EP-A2- 1 493 565
- EP-A2- 1 653 207
- EP-A2- 1 653 207
- EP-A2- 1 772 266
- EP-A2- 1 772 266
- DE-A1- 102007 045 298
- US-A- 5 383 371
- US-A1- 2019 128 756

## Description

### TECHNICAL FIELD

The present invention relates to roller or cylinder nips, and more specifically to means and a method of dynamic measuring of conditions in a roller nip or cylinder nip.

### BACKGROUND

Within different processing segments, equipment having rotating pairs of rollers are often used. For many such pairs of rollers one or both of the rollers have a polymeric coating or other elastically deformable surface. When the rollers are pressed against each other with a force, a roller nip is created being an active part of the manufacturing process.

There are also roller nips in the form of so called open nips, wherein the pair of rollers are not in contact with each other. Such an open nip is usually used for compressing some kind of material received between the rollers.

Since the roller nip is normally important for the quality of the result of the process, there is a need of knowledge of the dynamic working parameters of the nip, such as how pressure, width and temperature develop during operation and how they compare with the static values for rollers at standstill, which values can be measured with use of handheld measuring instruments.

Background art is reflected for instance in EP1493565A2, EP1772266A2, EP1477315A1 and EP0867281A1.

### SUMMARY

An object of the present invention is to solve or at least mitigate the problems related to prior art. This object has now been achieved by means of the technique set forth in the appended independent claims; preferred embodiments being defined in the related dependent claims.

By dynamic measuring of operating parameters of a roller nip, the operation of the rollers of said nip may be adjusted manually or automatically in order to increase the quality of the process in use.

By forming one or more grooves in a roller, for instance in a steel roller covered by a polymeric coating or in a steel roller having no polymeric coating, a space is formed for receiving measuring means. The one or more grooves are normally placed in the longitudinal direction of the roller. The grooves are often placed in a boundary layer between the steel roller and its polymeric coating, if the steel roller has a polymeric coating. The measuring means provided in the one or more grooves can for instance sense the static or dynamic force applied in the roller nip as well as the width and temperature of the roller nip.

According to one aspect, a pair of rollers forming a roller nip is provided. At least one roller of the pair of rollers has at least one groove receiving measuring means. The at least one groove extends in axial direction along all of the at least one roller; wherein the at least one roller is a steel roller having a polymeric coating on the outer surface; and the at least one groove is placed on the outer circumference of the steel roller beneath the polymeric coating. The measuring means comprises one or more measuring modules; wherein the at least one measuring module comprises a force loading structure, a sensor element on a lower side of the force loading structure, and an amplifier card. The at least one groove comprises a cover strip mounted therein, wherein a release agent is placed on an upper side of the cover strip, and the polymeric coating is applied and vulcanised on the outside of the at least one roller.

According to another aspect, a method of dynamic roller nip measuring is provided, in which one or more measuring modules are placed in one or more grooves of at least one roller of a pair of rollers. The one or more measuring modules transmits signals to one or more communication modules. The one or more communication modules transmits signals to a remote computer.

According to a further aspect not forming part of the present disclosure, a method is provided for arranging measuring means at a nip of a pair of rollers. One or more grooves are milled in one of the rollers. A cover strip or blind modules are mounted in the one or more grooves. A release agent is then placed on the upper side of the cover strip or the blind modules. Thereafter a polymeric coating is applied and vulcanised on the outside of the at least one roller.

Further objects and advantages of the present invention and its embodiments will be discussed in the detailed description below.

### BRIEF DESCRIPTION OF THE DRAWINGS

By way of example, embodiments of the present invention will now be described with reference to the accompanying drawings, in which:
Fig. 1 is a schematic end view of a pair of rollers;
Fig. 2 is an end view of a core roller of one of the rollers of Fig. 1;
Fig. 3 is a plan view of a roller provided with a module cartridge;
Fig. 4 is a plan view of the module cartridge of Fig. 3;
Fig. 5A is a cross section view of the roller of Fig. 3 taken at a measuring module;
Fig. 5B is a slightly modified version of the cross section view of Fig. 5A; and
Fig. 6 is an end view of a roller, ready for use.

### DETAILED DESCRIPTION OF EMBODIMENTS

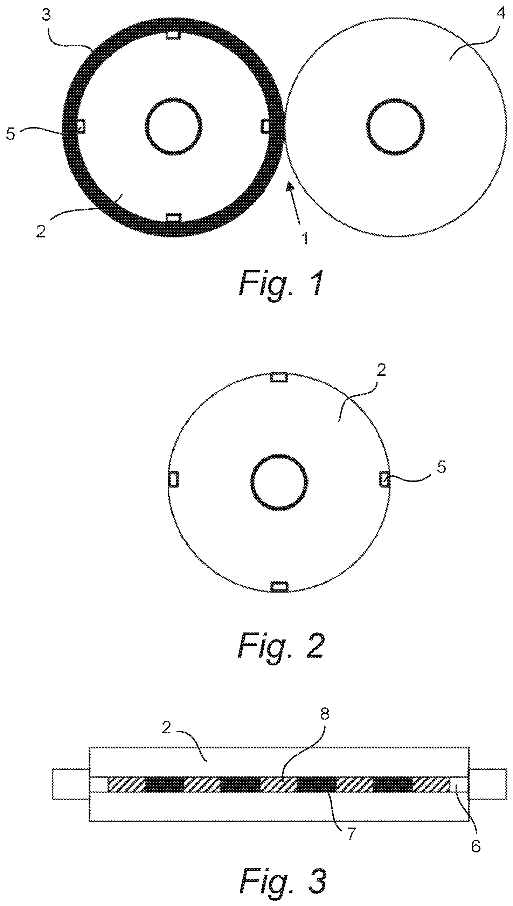

In Fig. 1 a pair of rollers 1 are shown, which rollers will form a nip in use. In a nip of this kind, at least one of said rollers has normally an elastically deformable surface. In the shown embodiment a first roller of said pair of rollers 1 has a core in the form of a steel roller 2. On the outer surface of the steel roller 2 there is a polymeric coating 3. Further, the steel roller 2 has a number of grooves 5 extending in axial direction along all of the steel roller 2. In the shown embodiment the steel roller 2 has four grooves 5, with equal spacing. Thus, the grooves 5 are placed opposite each other on the outer circumference of the steel roller 2. In other embodiments there is only one groove 5. The other roller 4 of the pair of rollers 1 has no grooves in the shown embodiment.

In an alternative embodiment not part of the present disclosure, the steel roller 2 has no polymeric coating, as indicated in Fig. 2. In further embodiments grooves are provided in both rollers 1, 2 of a roller nip or cylinder nip, whereby measuring means may be placed in the grooves of both rollers 1, 2.

The grooves 5 of the steel roller 2 are provided to receive measuring means, for instance placed in module cartridges 6. In the module cartridge 6 a number of measuring modules 7 are placed alternately with blind modules 8. In some embodiments a number of measuring modules 7 are placed in a groove 5 without any intermediate blind modules 8. The length of the module cartridge 6 corresponds with the axial length of the steel roller 2. In other embodiments measuring modules 7 are placed directly in one of the grooves 5 of the steel roller 2. Also in this latter case there are normally alternating measuring modules 7 and blind modules 8, whereby the alternating measuring modules 7 and blind modules 8 will form a single unit. The length of said single unit corresponds with the axial length of the one or more grooves 5 of the steel roller 2. In still further embodiments not part of the present disclosure one or more measuring modules are placed as single units in discrete openings adapted to the size of the measuring modules and milled in a steel roller.

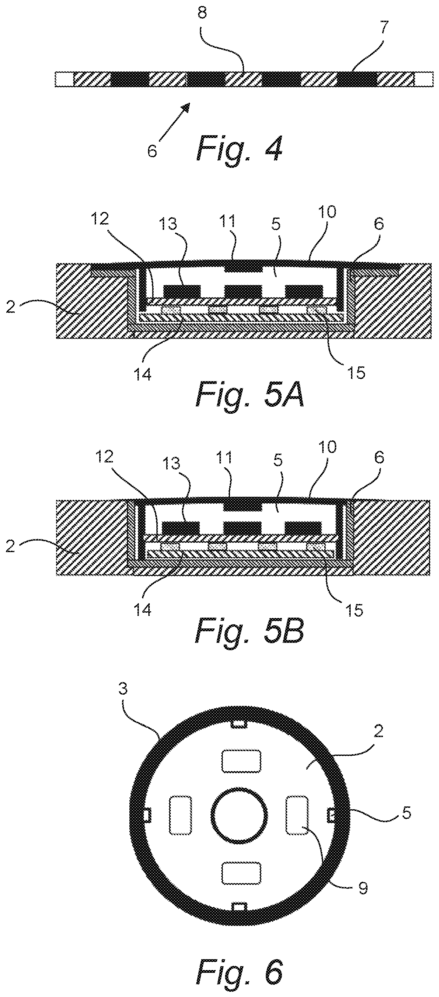

According to the embodiment shown in Fig. 5A, the measuring module 7 comprises a force loading structure 10. On a lower side of the force loading structure 10, sensing means or a sensor element 11 is placed, thus, facing the centre of the steel roller 2. In other embodiments (not shown), the sensor element is placed on the upper side of the force loading structure 10. The measuring module 7 further comprises an amplifier card 12, with electronic components 13, for receiving signals from the sensor element 11. The amplifier card 12 may for instance perform signal processing. For this purpose, the amplifier card 12 may have a microprocessor (not shown). In the shown embodiment, the measuring module 7 is placed in a module cartridge 6. Between the measuring module 7 and the bottom of the module cartridge 6, a bus circuit board 14 is placed having a number of contact rails 15.

In Fig. 5B, a slightly modified version of the embodiment of Fig. 5A is shown. Here, the module cartridge 6 has a simplified shape, which requires less material and interference with the steel roller. In Fig. 5A, the force loading structure 10 extends substantially over a vertical edge portion of the module cartridge 6, whereas in Fig. 5B, it does not. In certain embodiments (not shown), the groove 5 has no cartridge 6.

The measuring modules 7 are placed to create a number of sensing points having a predetermined spacing along the length of the roller. The measuring modules 7 measures the applied force on its force loading structure 10, by means of the application against or the elongation in the mechanical structure and integrated sensor element 11. The measuring modules 7 may also be equipped so that they can measure the surface temperature at the applied static or dynamic force and for example nip width, acceleration/rotational speed, torque or impact. To measure temperature at least one measuring module is provided with a temperature sensor. The number of grooves 5 of the steel roller 2 may vary. Measuring modules 7 or the module cartridge 6 may be placed in only some or all of the grooves 5. Measuring modules 7 measuring different properties may be placed in different grooves 5. It is also possible to have measuring modules 7 measuring different properties in a single groove 5. By having measuring modules 7 or a module cartridge 6 in each groove 5 instead of only one or two grooves 5, the condition of the roller nip or cylinder nip is monitored more closely. For instance with four grooves 5 one can measure possible ovality of the steel roller 2 with the applied polymeric coating 3.

The measuring modules 7 transmit measuring signals to one or more communication modules 9 placed at the gable of the steel roller 2. The measuring modules 7 are docked to the contact rails 15 of the module cartridge 6, in which contact rails 15 both power supply and signal transfer are provided. In embodiments not having any module cartridge, the measuring modules 7 and alternating blind modules 8 are docked together by means of intermediate connectors. In a further embodiment alternating measuring modules 7 and blind modules 8 are placed in a module cartridge docked together by means on intermediate connectors. Thus, in the latter case the module cartridge may not have any contact rails. The signals are received in an outermost measuring module 7, which measuring module 7 also has means for power supply. The measuring modules 7 are interconnected with the one or more communication modules 9 mounted on the gable of the roller 1. For the embodiment not part of the present disclosure where measuring modules 7 placed in discrete openings, said measuring modules 7 will communicate wireless with the communication modules 9. Each communication module 9 transfers data to and receives instructions from a remote calculation and control computer, having a graphical interface for presentation of operational conditions. The measuring signal can also be used for the application of force for the pair of rollers 1 and thereby keeping one or more of the measured parameters at a constant level.

The grooves 5 of the steel roller 2 is normally given by groove milling. After groove milling of the steel roller 2 and before applying and vulcanisation of the polymeric coating 3 blind modules 8 or a complete cover strip are mounted so that the total length of the groove 5 is covered. The upper side of the blind modules 8 or the cover strip are coated with a release agent in order to, after vulcanisation and grinding of the roller, enable dismounting at the same time as measuring modules 7 and possible blind modules 8 are brought in with the predetermined configuration. In the latter case the measuring modules 7 and possible blind modules 8 are normally coated with a low-friction or release agent to facilitate insertion. The measuring modules 7 and/or the blind modules 8 are often placed in the module cartridge 6. In case of a fault signal of a measuring module 7, said measuring module 7 may be dismounted and be replaced with a new measuring module 7. This is done by pulling the measuring modules 7 and blind modules 8, possibly placed in the module cartridge 6, out from and into the groove 5 of the steel roller 2. The measuring modules 7 and blind modules 8 are pulled or pushed as one unit out from or into the groove 5. If it is not possible to press the measuring modules 7 or the module cartridge 6 in or out by hand, the procedure can be done by means of a pneumatic or hydraulic device which also may be provided with air injection in for example the measuring modules 7, the blind modules 8 or the module cartridge 6, to thereby reduce friction further.

**In** use the measuring modules 7 placed in the one or more grooves 5 of the steel roller send signals to the one or more communication modules 9 during operation of the pair of rollers 1 forming the nip. The signals from the measuring modules 7 are transmitted by the contact rails 15 or by means of the intermediate connectors between the alternating measuring modules 7 and blind modules 8 to the one or more communication modules 9. The one or more communication modules 9 transmit the signals from the measuring modules 7 to a remote computer, having a graphical interface for presentation of the operational conditions. The one or more communication modules 9 can also receive control signals from the remote computer. As indicated above it is possible to measure different properties of the roller or cylinder nip and the rollers or cylinders of the nip.

As various changes could be made in the above structures without departing from the scope of the disclosure, it is intended that all matter contained in the above description or shown in the accompanying drawings shall be interpreted as illustrative and not in a limiting sense. For instance, although certain examples of measuring means and sensor means have been described herein, it is appreciated that further types of such means can be applied.

## Claims

1. A pair of rollers forming a roller nip,
wherein at least one roller of said pair of rollers (1) has at least one groove (5) comprising measuring means, wherein the at least one groove (5) extends in axial direction along all of the at least one roller;
wherein the at least one roller is a steel roller (2) having a polymeric coating (3) on the outer surface;
wherein the at least one groove (5) is placed on the outer circumference of the steel roller (2) beneath the polymeric coating (3);
wherein the measuring means comprises one or more measuring modules (7);
wherein the at least one measuring module (7) comprises a force loading structure (10), a sensor element (11) on a lower side of the force loading structure (10), and an amplifier card (12), and wherein the at least one groove (5) comprises a cover strip mounted therein, wherein a release agent is placed on an upper side of the cover strip, and wherein the polymeric coating (3) is applied and vulcanised on the outside of the at least one roller.

2. The pair of rollers of claim 1, wherein the at least one measuring module (7) comprises a temperature sensor.

3. The pair of rollers of claim 1 or 2, further comprising contact rails (15) and one or more communication modules (9), wherein the one or more measuring modules (7) and alternating blind modules (8) are configured to be placed in a module cartridge (6), wherein the one or more measuring modules (7) are connected to the contact rails (15) in the module cartridge (6), wherein the signals from the one or more measuring modules (7) are transmitted via the contact rails (15) to the one or more communication modules (9).

4. The pair of rollers of claim 3, wherein the contact rails (15) have means for power supply to the one or more measuring modules (7).

5. The pair of rollers of claim 1 or 2, wherein the measuring modules (7) and alternating blind modules (8) are connected to each other and to the one or more communication modules (9) by means of intermediate connectors.

6. The pair of rollers of any one of the claims 3-5, wherein the one or more communication modules (9) are placed at a gable of the at least one roller and wherein signals from the measuring modules (7) are transmitted via an outermost measuring module (7) to the one or more communication modules (9).

7. A method of dynamic roller nip measuring of a pair of rollers (1) according to any one of the claims 1-6, wherein one or more measuring modules (7) are placed in one or more grooves (5) of at least one roller of said pair of rollers (1); wherein the one or more measuring modules (7) transmits signals to one or more communication modules (9); and wherein the one or more communication modules (9) transmits signals to a remote computer.

8. The method of claim 7, wherein the signals from the one or more measuring modules (7) are sent to the one or more communication modules (9) by means of contact rails (15) of a module cartridge (6), in which the one or more measuring modules (7) are placed.

9. The method of claim 7, wherein the signals from the one or more measuring modules (7) are sent to the one or more communication modules (9) by means of intermediate connectors of the one or more measuring modules (7).

10. Use of measuring means and sensing means in a pair of rollers forming a roller nip according to any one of the claims 1-6.

## Patentansprüche

1. Walzenpaar, das einen Walzenspalt bildet,
wobei mindestens eine Walze des Walzenpaars (1) mindestens eine Nut (5) aufweist, die Messmittel aufweist, wobei sich die mindestens eine Nut (5) in axialer Richtung über die gesamte mindestens eine Walze erstreckt;
wobei die mindestens eine Walze eine Stahlwalze (2) mit einer Polymerbeschichtung (3) auf der Außenfläche ist;
wobei die mindestens eine Nut (5) am Außenumfang der Stahlwalze (2) unterhalb der Polymerbeschichtung (3) angeordnet ist;
wobei das Messmittel ein oder mehrere Messmodule (7) aufweist; wobei das mindestens eine Messmodul (7) eine Kraftaufnahmestruktur (10), ein Sensorelement (11) auf einer Unterseite der Kraftaufnahmestruktur (10) und eine Verstärkerplatine (12) aufweist, und wobei die mindestens eine Nut (5) einen darin montierten Abdeckstreifen aufweist, wobei ein Trennmittel auf einer Oberseite des Abdeckstreifens angeordnet ist, und wobei die Polymerbeschichtung (3) auf der Außenseite der mindestens einen Walze aufgebracht und vulkanisiert ist.

2. Walzenpaar nach Anspruch 1, wobei das mindestens eine Messmodul (7) einen Temperatursensor aufweist.

3. Walzenpaar nach Anspruch 1 oder 2, ferner aufweisend Kontaktschienen (15) und ein oder mehrere Kommunikationsmodule (9), wobei das eine oder die mehreren Messmodule (7) und alternierende Blindmodule (8) dazu eingerichtet sind, in einer Modulkassette (6) angeordnet zu werden,
wobei das eine oder die mehreren Messmodule (7) mit den Kontaktschienen (15) in der Modulkassette (6) verbunden sind, wobei die Signale von dem einen oder den mehreren Messmodulen (7) über die Kontaktschienen (15) an das eine oder die mehreren Kommunikationsmodule (9) übertragen werden.

4. Walzenpaar nach Anspruch 3, wobei die Kontaktschienen (15) Mittel zur Stromversorgung des einen oder der mehreren Messmodule (7) aufweisen.

5. Walzenpaar nach Anspruch 1 oder 2, wobei die Messmodule (7) und alternierende Blindmodule (8) miteinander und mit dem einen oder den mehreren Kommunikationsmodulen (9) mittels Zwischenverbindern verbunden sind.

6. Walzenpaar nach einem der Ansprüche 3-5, wobei das eine oder die mehreren Kommunikationsmodule (9) an einer Stirnseite der mindestens einen Walze angeordnet sind und wobei Signale von den Messmodulen (7) über ein äußerstes Messmodul (7) an das eine oder die mehreren Kommunikationsmodule (9) übertragen werden.

7. Verfahren zur dynamischen Messung eines Walzenspalts eines Walzenpaars (1) nach einem der Ansprüche 1-6, wobei ein oder mehrere Messmodule (7) in einer oder mehreren Nuten (5) mindestens einer Walze des Walzenpaars (1) angeordnet sind; wobei das eine oder die mehreren Messmodule (7) Signale an ein oder mehrere Kommunikationsmodule (9) übertragen; und wobei das eine oder die mehreren Kommunikationsmodule (9) Signale an einen entfernten Rechner übertragen.

8. Verfahren nach Anspruch 7, wobei die Signale von dem einen oder den mehreren Messmodulen (7) mittels Kontaktschienen (15) einer Modulkassette (6), in der das eine oder die mehreren Messmodule (7) angeordnet sind, an das eine oder die mehreren Kommunikationsmodule (9) gesendet werden.

9. Verfahren nach Anspruch 7, wobei die Signale von dem einen oder den mehreren Messmodulen (7) mittels Zwischenverbindern des einen oder der mehreren Messmodule (7) an das eine oder die mehreren Kommunikationsmodule (9) gesendet werden.

10. Verwendung von Messmitteln und Sensormitteln in einem Walzenpaar, das einen Walzenspalt bildet, nach einem der Ansprüche 1-6.

## Revendications

1. Paire de rouleaux formant une ligne de contact de rouleaux,
dans laquelle au moins un rouleau de ladite paire de rouleaux (1) présente au moins une rainure (5) comprenant des moyens de mesure, dans laquelle ladite au moins une rainure (5) s'étend en direction axiale sur toute la longueur de l'au moins un rouleau ;
dans laquelle l'au moins un rouleau est un rouleau en acier (2) présentant un revêtement polymère (3) sur la surface extérieure ;
dans laquelle l'au moins une rainure (5) est placée sur la circonférence extérieure du rouleau en acier (2) sous le revêtement polymère (3) ;
dans laquelle les moyens de mesure comprennent un ou plusieurs modules de mesure (7) ;
dans laquelle l'au moins un module de mesure (7) comprend une structure de chargement de force (10), un élément capteur (11) sur un côté inférieur de la structure de chargement de force (10), et une carte amplificatrice (12), et dans laquelle l'au moins une rainure (5) comprend une bande de recouvrement montée à l'intérieur de celle-ci, dans laquelle un agent de libération est placé sur le côté supérieur de la bande de recouvrement, et dans laquelle le revêtement polymère (3) est appliqué et vulcanisé sur l'extérieur de l'au moins un rouleau.

2. Paire de rouleaux selon la revendication 1, dans laquelle l'au moins un module de mesure (7) comprend un capteur de température.

3. Paire de rouleaux selon la revendication 1 ou 2, comprenant en outre des rails de contact (15) et un ou plusieurs modules de communication (9), dans laquelle les un ou plusieurs modules de mesure (7) et des modules de store alternés (8) sont configurés pour être placés dans une cartouche de module (6),
dans laquelle les un ou plusieurs modules de mesure (7) sont reliés aux rails de contact (15) dans la cartouche de module (6), dans laquelle les signaux provenant des un ou plusieurs modules de mesure (7) sont transmis via les rails de contact (15) aux un ou plusieurs modules de communication (9).

4. Paire de rouleaux selon la revendication 3, dans laquelle les rails de contact (15) présentent des moyens d'alimentation électrique pour les un ou plusieurs modules de mesure (7).

5. Paire de rouleaux selon la revendication 1 ou 2, dans laquelle les modules de mesure (7) et des modules de store alternés (8) sont reliés entre eux et à un ou plusieurs modules de communication (9) au moyen de connecteurs intermédiaires.

6. Paire de rouleaux selon l'une quelconque des revendications 3 à 5, dans laquelle les un ou plusieurs modules de communication (9) sont placés au niveau d'un pignon de l'au moins un rouleau et dans laquelle des signaux provenant des modules de mesure (7) sont transmis via un module de mesure le plus externe (7) aux un ou plusieurs modules de communication (9).

7. Procédé de mesure dynamique de ligne de contact de rouleaux d'une paire de rouleaux (1) selon l'une quelconque des revendications 1 à 6, dans lequel un ou plusieurs modules de mesure (7) sont placés dans une ou plusieurs rainures (5) d'au moins un rouleau de ladite paire de rouleaux (1) ; dans lequel les un ou plusieurs modules de mesure (7) transmettent des signaux à un ou plusieurs modules de communication (9) ; et dans lequel les un ou plusieurs modules de communication (9) transmettent des signaux à un ordinateur distant.

8. Procédé selon la revendication 7, dans lequel les signaux provenant des un ou plusieurs modules de mesure (7) sont envoyés aux un ou plusieurs modules de communication (9) au moyen de rails de contact (15) d'une cartouche de module (6), dans laquelle les un ou plusieurs modules de mesure (7) sont placés.

9. Procédé selon la revendication 7, dans lequel les signaux provenant des un ou plusieurs modules de mesure (7) sont envoyés aux un ou plusieurs modules de communication (9) au moyen de connecteurs intermédiaires des un ou plusieurs modules de mesure (7).

10. Utilisation de moyens de mesure et de moyens de détection dans une paire de rouleaux formant une ligne de contact de rouleaux selon l'une quelconque des revendications 1 à 6.
